# EUROPÄISCHE PATENTANMELDUNG

(11) **EP 0 830 042 A2**
(43) Veröffentlichungstag der Anmeldung: **18.03.1998**
(21) Anmeldenummer: 97115154.3
(22) Anmeldetag: 02.09.1997
(51) Int. Cl.: H04Q 7/32, H04Q 7/20

(54) **Telekommunikationsgerät zum Betrieb an einem festen Telekommunikationsnetz**

(30) Priorität: 12.09.1996 DE 19636990
(71) Anmelder: Hagenuk Telecom GmbH, 24118 Kiel (DE)
(72) Erfinder: Jerono, Winfried, Dr., 24229 Dänischenhagen (DE); Riechers, Jan, 22459 Hamburg (DE)
(74) Vertreter: Hansmann, Dierk, Dipl.-Ing.

(57) **Zusammenfassung**

Es wird ein Telekommunikationsgerät zum Betrieb an einem festen Telekommunikationsnetz beschrieben, welches sich dadurch auszeichnet, daß es einen mit einem Mobilfunknetz verbindbaren Mobilfunk-Transceiver zur Entgegennahme von an eine Mobilfunk-Rufnummer eines Teilnehmers eines Mobilfunknetzes gerichteten Anrufen aufweist. Diese Anrufe werden an ein Endgerät weitergeschaltet, welches sich zum Beispiel auf dem Schreibtisch des Teilnehmers befindet oder - im Falle einer Schurlos-Komponente - von diesem mitgeführt wird. Durch die Erfindung wird sichergestellt, daß ein Teilnehmer eines Mobilfunknetzes unter seiner Mobilfunk-Rufnummer auch innerhalb von Gebäuden erreichbar ist, in denen eine Mobilfunkversorgung seines Mobilfunkgerätes nicht mehr sichergestellt ist.

## Beschreibung

Erfindung betrifft ein Telekommunikationsgerät zum Betrieb an einem festen Telekommunikationsnetz.

Unter einem Telekommunikationsgerät soll im folgenden sowohl ein einzelnes Telefongerät, als auch eine Telekommunikationsanlage verstanden werden, die aus einer Zentraleinheit sowie einer oder mehreren Endgeräten besteht, welche mit der Zentraleinheit schnurgebunden oder schnurlos (zum Beispiel nach dem DECT-Standard) verbunden sind.

Telekommunikationsanlagen (Tk-Anlagen) haben vorwiegend im gewerblichen Bereich eine weite Verbreitung gefunden. Mit Hilfe einer solchen Tk-Anlage können mehrere Amtsleitungen auf eine Vielzahl von Mitarbeitern verteilt werden. Jeder Mitarbeiter verfügt in diesem Fall über ein eigenes Endgerät, welches über eine entsprechende Durchwahlnummer zu erreichen ist. Außerdem sind mit diesen Tk-Anlagen zum Beispiel interne Gespräche zwischen den einzelnen Mitarbeitern möglich, wobei diese internen Verbindungen gebührenfrei sind.

Tk-Anlagen können auch mit sogenannten Schnurlos-Komponenten versehen sein. In diesem Fall können an der Tk-Anlage neben den oben genannten schnurgebundenen Endgeräten auch sogenannte schnurlose Endgeräte betrieben werden. Diese Möglichkeit ist insbesondere für solche Mitarbeiter interessant, die sich nicht immer an einem festen Arbeitsplatz aufhalten, sondern zum Beispiel häufig auf dem Firmengelände unterwegs sind. Die schnurlosen Endgeräte sind im allgemeinen sehr klein und handlich, so daß sie überall mitgeführt werden können. Die Verbindung zwischen der Tk-Anlage und dem schnurlosen Endgerät wird nach dem sogenannten DECT-Standard hergestellt.

Neben diesen Tk-Geräten oder -Anlagen, die an einem öffentlichen Festnetz betrieben werden, sind auch Mobilfunktelefone bekannt, die mit digitalen Mobilfunknetzen arbeiten. Mobilfunknetze sind in den letzten Jahren erheblich ausgebaut worden, so daß inzwischen eine nahezu flächendeckende Versorgung möglich ist. Die drei heute bekannten Mobilfunknetze basieren auf dem GSM- bzw. dem DCS 1800-Standard.

Neben Anwendungen im privaten Bereich sind Mobilfunktelefone auch im gewerblichen Bereich weit verbreitet. Dies ist insbesondere dort der Fall, wo zum Beispiel Außendienst-Mitarbeiter ständig erreichbar sein müssen. Darüberhinaus werden über Mobilfunktelefone mittlerweile auch Datenanwendungen unterstützt, so daß an ein solches Gerät auch ein Faxgerät oder ein Computer (Notebook) zur Datenübertragung angeschlossen werden kann.

Ein Nachteil der Mobilfunknetze besteht jedoch darin, daß trotz der nahezu flächendeckenden Versorgung ein Teilnehmer innerhalb von Gebäuden aufgrund der starken Dämpfung des Funkfeldes meistens nicht zu erreichen ist. Wenn ein Anrufer einen Teilnehmer an jedem Aufenthaltsort erreichen will, muß er somit nicht nur über die Rufnummer des Mobiltelefons verfügen, sondern er muß auch die Rufnummer eines Tk-Gerätes kennen, welches in herkömmlicher Weise mit dem Festnetz verbunden ist und zum Beispiel auf dem Schreibtisch des Teilnehmers steht.

Die Tatsache, daß sich jeder Anrufer auch die Rufnummer eines Tk-Gerätes und somit insgesamt zwei Rufnummern merken muß und gegebenenfalls einen vergeblichen Anruf tätigt, wird als nachteilig angesehen.

Der Erfindung liegt deshalb die Aufgabe zugrunde, nach einer Möglichkeit zu suchen, mit der ein Teilnehmer eines Mobilfunknetzes unter der Rufnummer seines Mobilfunktelefons auch dort erreichbar ist, wo die funktechnische Versorgung seines Mobilfunktelefons nicht mehr gewährleistet ist, wie zum Beispiel innerhalb von Gebäuden.

Gelöst wird diese Aufgabe mit einem eingangs genannten Telekommunikationsgerät zum Betrieb an einem festen Telekommunikationsnetz, welches sich dadurch auszeichnet, daß es einen mit einem Mobilfunknetz verbindbaren Mobilfunk-Transceiver zum Empfang von an eine Mobilfunk-Rufnummer eines Teilnehmers des Mobilfunknetzes gerichteten Anrufen aufweist.

Diese Lösung hat unter anderem den, Vorteil, daß der betreffende Teilnehmer auch dann über seine Mobilfunknummer erreichbar ist, wenn er sich außerhalb des Versorgungsbereiches des Mobilfunknetzes befindet und statt dessen zum Beispiel innerhalb eines Gebäudes über ein erfindungsgemäßes Telekommunikationsgerät verfügt. Da dieses wiederum ein schnurloses Endgerät aufweisen kann, ist auch innerhalb eines Gebäudes eine weitgehende Bewegungsfreiheit sichergestellt.

Vorteilhafte Ausführungsformen der Erfindung werden in den Unteransprüchen beschrieben.

Danach kann der Mobilfunk-Transceiver über eine Antenne mit einem Mobilfunknetz verbindbar sein, die im Versorgungsbereich des Mobilfunknetzes positioniert ist. Dies kann im allgemeinen bereits dadurch erreicht werden, daß die Antenne in Fensternähe oder an einem Fenster angeordnet wird.

Der Mobilfunk-Transceiver kann auch von dem Telekommunikationsgerät absetzbar ausgeführt und in ähnlicher Weise im Versorgungsbereich des Mobilfunknetzes positioniert sein.

Das Telekommunikationsgerät kann eine Tele kommunikationsanlage mit mindestens einem schnurgebundenen Endgerät sein.

Das Telekommunikationsgerät kann eine Telekommunikationsanlage mit mindestens einem schnurlosen Endgerät sowie einer Zentraleinheit mit einem DECT-Transceiver zur Verbindung mit den schnurlosen Endgeräten sein.

Ferner ist vorzugsweise mindestens eine Kartenleseeinrichtung für SIM- und/oder Plug-in-Karten zur Authentisierung und Lokalisierung eines Teilnehmers eines Mobilfunknetzes vorgesehen. Der Vorteil dieser Ausführungsform besteht darin, daß der Teilnehmer nur die Karte aus seinem Mobiltelefon entnehmen und in die Kartenleseeinrichtung des Telekommunikationsgerätes einsetzen muß, wenn eingehende Anrufe über dieses Gerät empfangen werden sollen.

Vorzugsweise ist weiterhin ein RAM- oder EPROM-Speicher zur Speicherung einer Rufnummer eines Endgerätes, an das die an eine Mobilfunk-Rufnummer gerichteten Anrufe weitergeleitet werden, vorgesehen.

In dem RAM- oder EPROM-Speicher kann auch eine Mehrzahl von Rufnummern gespeichert sein, die jeweils mehreren, durch eine SIM- oder Plug-in-Karten identifizierten Teilnehmern zugeordnet sind.

Ein automatischer Anrufbeantworter kann zur Entgegennahme eingehender Anrufe dienen.

Die mindestens eine Kartenleseeinrichtung ist vorzugsweise von der Tk-Anlage absetzbar ausgeführt, so daß sie z.B. an einem Arbeitsplatz des/der Teilnehmer(s) positionierbar und somit direkt zugänglich ist.

Die mindestens eine Kartenleseeinrichtung kann über eine Sprachverbindungsleitung mit Hilfe des Tonwahlverfahrens oder über eine spezifische Systemschnittstelle mit der Tk-Anlage verbunden sein.

Zur Steuerung des Mobilfunk-Transceivers sowie der mindestens einen Kartenleseeinrichtung, des ROM- oder EPROM-Speichers und eines ISDN-Anschlusses ist vorzugsweise eine Steuereinheit vorgesehen.

Weitere Einzelheiten, Merkmale und Vorteile der Erfindung ergeben sich aus der nachfolgenden Beschreibung einer bevorzugten Ausführungsform anhand der Zeichnung. Es zeigt:
- Fig. 1: eine schematische Darstellung einer erfindungsgemäßen Telekommunikationsanlage sowie deren Zusammenwirken mit verschiedenen Komponenten; und
- Fig. 2: ein Blockschaltbild einer Zentraleinheit der in Figur 1 gezeigten Tk-Anlage.

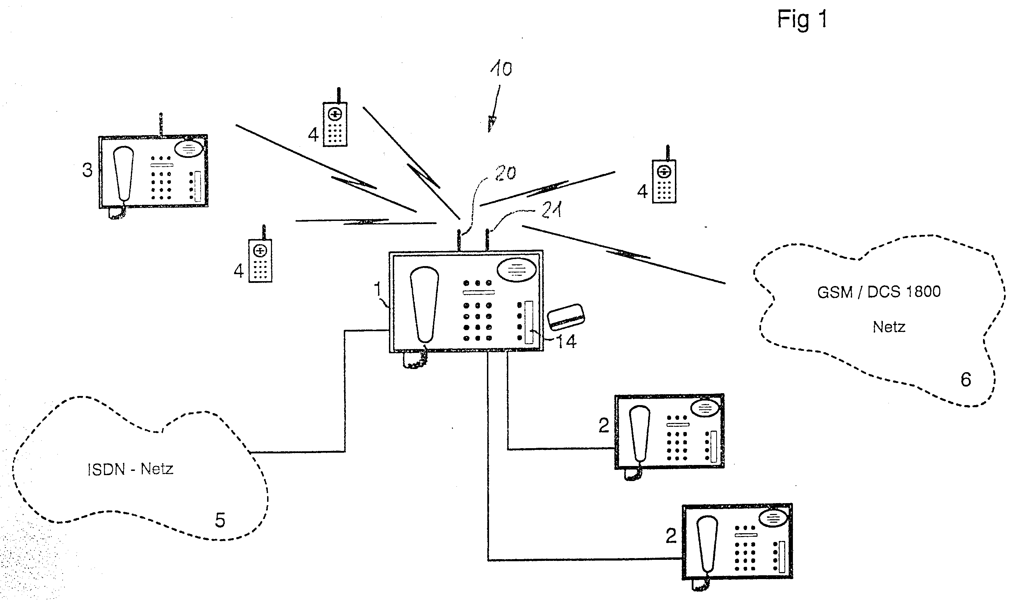

Figur 1 Zeigt eine Tk-Anlage 10, die in bekannter Weise (schnurgebunden oder schnurlos) mit einem ISDN-Netz 5 verbunden ist. An der Tk-Anlage 10 werden schnurgebundene Endgeräte 2 sowie schnurlose Endgeräte 3, 4, deren Anbindung an eine Zentraleinheit 1 über das DECT-Protokoll erfolgt, betrieben. Bei den schnurlosen Endgeräten kann es sich um Tischgeräte 3 sowie Mobilteile 4 handeln.

Die Tk-Anlage 10 kann natürlich zusätzlich oder alternativ auch mit einem analogen Festnetz verbunden sein.

Außerdem ist die Tk-Anlage 10 mit einem Mobilfunknetz 6, wie zum Beispiel einem GSM-/DCS 1800-Netz verbunden.

Zur drahtlosen Kommunikation der Zentraleinheit 1 mit den schnurlosen Endgeräten 3, 4 ist eine erste Antenne 20 vorgesehen, während eine zweite Antenne 21 zur Verbindung mit dem Mobilfunknetz 6 dient.

Zur Einbuchung in das Mobilfunknetz 6 ist die Tk-Anlage 10 schließlich mit einer Kartenleseeinrichtung 14 versehen.

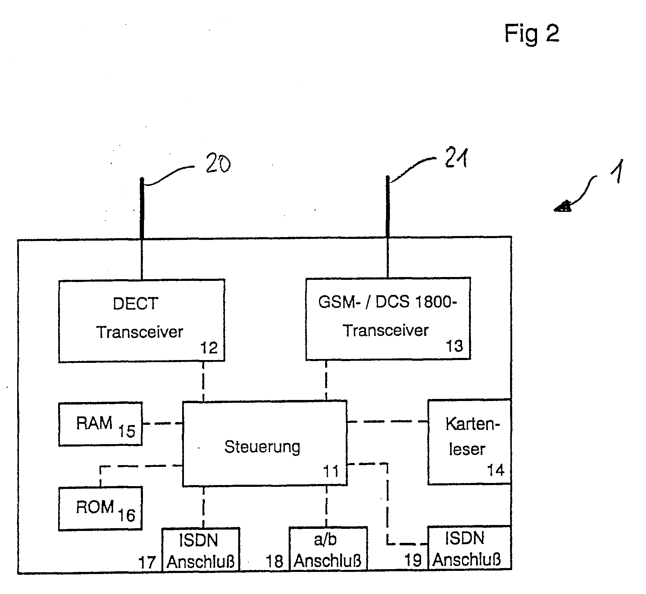

Figur 2 zeigt den prinzipiellen Aufbau der Zentraleinheit 1 der Tk-Anlage 10. Neben einer Steuereinheit 11 ist ein DECT-Transceiver 12 zur Anbindung der schnurlosen Endgeräte vorgesehen. Weiterhin weist die Tk-Anlage 10 einen GSM-/DCS 1800-Transceiver 13 zur Verbindung mit einem Mobilfunknetz sowie die Kartenleseeinrichtung 14 zur Aufnahme von SIM- oder Plug-in-Karten zum Einbuchen in ein Mobilfunknetz auf. Der GSM-/DCS 1800-Transceiver 13 stellt im wesentlichen die HF-Komponenten sowie die Einheiten zur Signalverarbeitung dar, wie sie auch in einem Mobilfunktelefon vorhanden sind.

Zur Speicherung und Ausführung des Betriebssystems sind weiterhin ein RAM- sowie ein ROM-Speicher 15, 16 vorgesehen. Der ROM-Speicher 16 kann durch ein EPROM erweitert werden, in welchem Konfigurationsdaten und Kundeneinstellungen abgespeichert werden.

Weiterhin sind zwei ISDN-Anschlüsse 17, 19 für die Anbindung an das ISDN-Netz 5 vorhanden. Zum Anschluß von schnurgebundenen analogen Endgeräten enthält die Tk-Anlage 10 einen a/b-Anschluß 18 (Terminaladapter), während für schnurgebundene digitale Endgeräte mindestens ein ISDN-Anschluß 17, 19 (S₀-Anschluß) vorgesehen ist.

Die erfindungsgemäße Tk-Anlage 10 arbeitet wie folgt: ein Teilnehmer eines Mobilfunknetzes, der die Dienste seines Netzbetreibers in Anspruch nehmen möchte, muß sich diesem gegenüber zunächst authentisieren. Dies ist nicht nur für die Gebührenabrechnung, sondern auch für die Lokalisierung des Mobilfunktelefons erforderlich. Üblicherweise wird dafür eine sogenannte SIM-Karte (Subscriber Identity Module) verwendet, die in das Mobilfunktelefon eingesetzt werden muß. Zu diesem Zweck dient in der erfindungsgemäßen Tk-Anlage der Kartenleser 14.

Zukünftig soll ein Mobilfunkteilnehmer neben seiner SIM-Karte auch eine sogenannte Plug-in-Karte erwerben können, auf der die gleiche Rufnummer und die gleiche Identität gespeichert ist, wie auf der SIM-Karte. Mit einer solchen Karte kann sich der Teilnehmer bei den erfindungsgemäßen Tk-Anlagen als Mobilfunkteilnehmer ausweisen und in das Mobilfunknetz einbuchen. In diesem Fall kann die SIM-Karte in seinem Mobilfunktelefon verbleiben.

Wenn also ein Teilnehmer, zum Beispiel ein Außendienstmitarbeiter, mit seinem Mobilfunkgerät unterwegs ist, ist er unter seiner Mobilfunk-Rufnummer erreichbar. Wenn er in seine Firma zurückkehrt oder sich in ein Gebäude begibt, in dem die Mobilfunknetz-Versorgung nicht mehr gewährleistet ist, aktiviert er die Rufumleitung von seinem Mobilfunkgerät auf eine erfindungsgemäße Tk-Anlage bzw. ein damit verbundenes Endgerät. Dies geschieht dadurch, daß er zunächst zur Authentisierung und Lokalisierung entweder die SIM-Karte aus seinem Mobilfunkgerät, oder eine separate Plug-in-Karte in die Kartenleseeinrichtung 14 der Tk-Anlage 10 einlegt. Außerdem gibt er die Rufnummer des mit der Tk-Anlage 10 verbundenen (schnurgebundenen oder schnurlosen) Endgerätes 2, 3, 4 ein, unter der er in dem Gebäude bzw. auf dem Firmengelände erreichbar ist. Diese Rufnummer kann auch auf der Plug-in-Karte gespeichert sein, so daß sie automatisch mit dem Einlegen dieser Karte in der Tk-Anlage aktiviert wird. Die Rufnummer des Endgerätes wird von der Steuereinheit 11 den übrigen Daten der eingelegten Karte zugeordnet und in dem RAM- oder wahlweise dem EPROM-Speicher 15 abgespeichert.

Anstelle einer manuellen Eingabe der Rufnummer über die Bedientasten der Tk-Anlage kann die Rufnummer auch automatisch in Verbindung mit dem Lesen der SIM-Karte bzw. der Plug-in-Karte aktiviert werden. In diesem Fall ist in der Tk-Anlage 10 ein Speicher vorgesehen, in dem eine oder mehrere Rufnummern abgespeichert sind, die jeweils einer bestimmten SIM-Karte zugeordnet sind. Dies ist insbesondere dann interessant, wenn die Tk-Anlage durch mehrere Mobilfunk-Teilnehmer genutzt wird. Wenn einer der Teilnehmer seine SIM-Karte in die Kartenleseeinrichtung 14 einlegt, werden die Daten der Karte mit den Daten im Speicher verglichen. Die Rufnummer des dem betreffenden Teilnehmer zugeordneten Endgerätes wird dann automatisch mit den Daten der SIM-Karte in der Steuereinheit 11 verknüpft und aktiviert.

Nach Eingabe bzw. Identifizierung und Auswahl der Rufnummer des gewünschten bzw. dem Teilnehmer zugeordneten Endgerätes erfolgt dann eine Einbuchung der Tk-Anlage 10 in das Mobilfunknetz mit Hilfe der SIM-Karte des Teilnehmers. Diese Einbuchung wird mit Hilfe des GSM-/DCS 1800-Transceivers 13 im wesentlichen in der gleichen Weise durchgeführt wie bei einem Mobilfunkgerät. Anrufe, die an die Mobilfunk-Rufnummer des Teilnehmers gerichtet sind, werden nun mit dem GSM-/DCS 1800-Transceiver 13 empfangen und mit der Steuereinrichtung 11 an das ausgewählte bzw. zugeordnete Endgerät 2, 3, 4 weitergeleitet.

Der Teilnehmer ist somit stets unter seiner Mobilfunk-Rufnummer erreichbar, auch wenn er sich innerhalb von Gebäuden befindet, in denen die funktechnische Versorgung seines Mobilfunkgerätes nicht sichergestellt ist. Voraussetzung ist lediglich, daß entweder die Antenne des GSM-/DCS 1800-Transceivers 13 an einer geeigneten Stelle innerhalb des Gebäudes, zum Beispiel an einem Fenster positioniert ist, von wo aus eine Verbindung mit dem Mobilfunknetz herstellbar ist. Alternativ dazu kann auch der GSM-/ DCS 1800-Transceiver 13 als solcher von der Tk-Anlage 10 absetzbar ausgeführt sein und an einem entsprechenden Ort aufgestellt werden, an dem eine ausreichende Funkversorgung vorhanden ist.

Wenn der Teilnehmer darüberhinaus innerhalb des Gebäudes ein schnurloses Endgerät 4 benutzt, besitzt er die gleiche Bewegungsfreiheit, wie außerhalb des Gebäudes mit seinem Mobilfunkgerät.

Neben der ständigen Erreichbarkeit des Teilnehmers zeichnet sich die Erfindung auch dadurch aus, daß der Teilnehmer nach Beendigung seiner Arbeit seine SIM-Karte in der TK-Anlage 10 belassen kann und somit Anrufe, die zum Beispiel außerhalb der Arbeitszeit eingehen, auf einem Anrufbeantworter der Tk-Anlage gespeichert werden können.

Ferner kann die Kartenleseeinrichtung 14 auch zur Aufnahme von mehreren Karten vorgesehen sein, so daß mehrere Mobilfunk-Teilnehmer die erfindungsgemäße Tk-Anlage nutzen können. Dies kann insbesondere dann interessant sein, wenn Firmenbesuchern, die selbst über ein Mobilfunktelefon und eine SIM- oder Plug-in-Karte verfügen, die Mitbenutzung der erfindungsgemäßen Tk-Ahlage angeboten werden soll.

Ferner kann es sinnvoll sein, die Kartenleseeinrichtung 14 von der Tk-Anlage absetzbar bzw. getrennt auszuführen. In diesem Fall können auch mehrere Kartenleser parallel unterstützt und betrieben werden, wobei diese zum Beispiel direkt am Arbeitsplatz des Teilnehmers aufgestellt sind. Die Übertragung der Daten von der Kartenleseeinrichtung 14 zur Anlage kann entweder mit Hilfe des Tonwahlverfahrens über eine Sprachverbindungsleitung oder eine spezifische Systemschnittstelle der Tk-Anlage erfolgen.

Wie eingangs bereits erwähnt wurde, kann anstelle einer Tk-Anlage auch ein einzelnes Telekommunikationsendgerät (zum Beispiel ein Komfort-Telefon) in der erfindungsgemäßen Weise ausgestattet sein.

## Patentansprüche

1. Telekommunikationsgerät zum Betrieb an einem festen Telekommunikationsnetz, gekennzeichnet durch einen mit einem Mobilfunknetz (6) verbindbaren Mobilfunk-Transceiver (13) zum Empfang von an eine Mobilfunk-Rufnummer eines Teilnehmers des Mobilfunknetzes gerichteten Anrufen.

2. Telekommunikationsgerät nach Anspruch 1, dadurch gekennzeichnet, daß der Mobilfunk-Transceiver (13) über eine Antenne (21) mit einem Mobilfunknetz (6) verbindbar ist, die im Versorgungsbereich des Mobilfunknetzes positioniert ist.

3. Telekommunikationsgerät nach Anspruch 1, dadurch gekennzeichnet, daß der Mobilfunk-Transceiver (13) von dem Telekommunikationsgerät absetzbar ausgeführt und im Versorgungsbereich des Mobilfunknetzes (6) positioniert ist.

4. Telekommunikationsgerät nach mindestens einem der vorhergehenden Ansprüche, dadurch gekennzeichnet, daß es eine Telekommunikationsanlage (10) mit mindestens einem schnurgebundenen Endgerät (2) ist.

5. Telekommunikationsgerät nach mindestens einem der Ansprüche 1 bis 4, dadurch gekennzeichnet, daß es eine Telekommunikationsanlage (10) mit mindestens einem schnurlosen Endgerät (3, 4) und einer Zentraleinheit (1) ist, die einen DECT-Transceiver (12) zur Verbindung mit dem mindestens einen schnurlosen Endgerät aufweist.

6. Telekommunikationsgerät nach mindestens einem der vorhergehenden Ansprüche, gekennzeichnet durch mindestens eine Kartenleseeinrichtung (14) für SIM- und/oder Plug-in-Karten zur Authentisierung und Lokalisierung eines Teilnehmers eines Mobilfunknetzes (6).

7. Telekommunikationsgerät nach mindestens einem der vorhergehenden Ansprüche, gekennzeichnet durch einen RAM- oder EPROM-Speicher (15) zur Speicherung einer über eine Tastatur oder mit einer Plug-in-Karte eingegebenen Rufnummer eines Endgerätes (2, 3, 4), an das die an eine Mobilfunk-Rufnummer gerichteten Anrufe weitergeleitet werden.

8. Telekommunikationsgerät nach Anspruch 7, dadurch gekennzeichnet, daß in dem RAM- oder EPROM-Speicher (15) eine Mehrzahl von Rufnummern gespeichert ist, die jeweils einem durch eine SIM- oder Plug-in-Karten identifizierten Teilnehmer zugeordnet sind.

9. Telekommunikationsgerät nach mindestens einem der vorhergehenden Ansprüche, gekennzeichnet durch einen automatischen Anrufbeantworter zur Entgegennahme eingehender Anrufe.

10. Telekommunikationsgerät nach mindestens einem der vorhergehenden Ansprüche, dadurch gekennzeichnet, daß die mindestens eine Kartenleseeinrichtung (14) von der Tk-Anlage (10) absetzbar ausgeführt ist.

11. Telekommunikationsgerät nach Anspruch 10, dadurch gekennzeichnet, daß die mindestens eine Kartenleseeinrichtung (14) über eine Sprachverbindungsleitung mit Hilfe des Tonwahlverfahrens oder über eine spezifische Systemschnittstelle mit der Tk-Anlage (10) verbunden ist.

12. Telekommunikationsgerät nach mindestens einem vorgehenden Ansprüche, gekennzeichnet durch eine Steuereinheit (11) zur zentralen Steuerung des Mobilfunk-Transceivers (13) sowie der mindestens einen Kartenleseeinrichtung (14), des ROM- oder EPROM-Speichers (15) und des mindestens eines ISDN-Anschlusses (17, 19).
